# EUROPÄISCHE PATENTANMELDUNG

(11) **EP 3 733 430 A1**
(43) Veröffentlichungstag der Anmeldung: **04.11.2020**
(21) Anmeldenummer: 20170914.4
(22) Anmeldetag: 22.04.2020
(51) Int. Cl.: B60C 23/04

(54) **VERFAHREN ZUR ZUORDNUNG VON RÄDERN ZU EINEM FAHRZEUG**

(30) Priorität: 29.04.2019 DE 102019111052
(71) Anmelder: Kraiburg Austria GmbH & Co. KG, 5132 Geretsberg (AT)
(72) Erfinder: Mayrhofer, Stefan, 4600 Wels (AT); Lackner, Johannes, 5132 Geretsberg (AT)
(74) Vertreter: Eder Schieschke & Partner mbB

(57) **Zusammenfassung**

Die Erfindung betrifft ein Verfahren zur Zuordnung von Rädern 7, 8, 9 zu einem Fahrzeug und/oder Überwachung von Reifenparametern, bei dem jedes Rad 7, 8, 9 jeweils eine Sende- und/oder Empfangseinheit (27) aufweist, wenigstens eine Empfangs- oder Sende- und Empfangseinheit 27 als Master-Einheit dient, die als Master-Einheit dienende Empfangs- oder Sende- und Empfangseinheit 27 wenigstens eine erste drahtlose WAN-Kommunikationsverbindung aufweist, mittels welcher sie mit einer dritten, externen Einheit (21) kommuniziert und seine eindeutige Kennung überträgt oder von dieser dritten, externen Einheit (21) abgefragt werden kann.. Weiterhin betrifft die Erfindung eine Anordnung sowie ein Rad zur Durchführung eines derartigen Verfahrens.

## Beschreibung

Die Erfindung betrifft ein Verfahren sowie eine Anordnung zur Zuordnung von Rädern zu einem Fahrzeug und/oder zur Überwachung von Reifenparametern.

Derartige Verfahren und Systeme finden beispielsweise im Kraftfahrzeugbereich Anwendung, um den Reifendruck und die Reifentemperatur von Rädern zu überwachen und Fehlfunktionen einem Fahrer als Alarm zu melden.

Existierende Reifendruckkontrollsysteme (RDKS) basieren auf Systemen, bei denen der Reifendruck eines Rads mittels eines Sensors überwacht wird. Ein derartiger Sensor des Rades wird hierzu üblicherweise bei der Montage an das Steuergerät des Fahrzeugs angemeldet, so dass die angemeldeten Sensoren ihre Daten an das Steuergerät übermitteln.

Der Zustand der Räder bzw. der Reifen sowie ein entsprechender Alarm über eine Fehlfunktion kann dann dem Fahrer des Fahrzeugs auf einem Konsolendisplay angezeigt werden. In der DE 10 2017 122 178 A1 wird beispielsweise ein Reifendrucküberwachungssystem für Fahrzeugräder vorgeschlagen, das gleichzeitig als Diebstahlschutzsystem fungiert. Bei diesem System ist in jedem Fahrzeugrad ein drahtloser Sendeempfänger platziert, um Reifendruckinformationen zu übermitteln und bei dem derselbe drahtlose Sendeempfänger zum Detektieren des Entfernens des Rads von einem Fahrzeug und zum Verfolgen der Position des entfernten Rads verwendet wird.

Die Konfiguration, also Zuordnung von Sensoren zu einem Fahrzeug, bei derartigen Systemen erfolgt durch ein Anmelden der Sensoren bzw. der Räder an ein Steuergerät des Fahrzeugs. Dies ist jedoch nicht trivial und damit für einen Fahrzeugeigentümer oder Fahrzeugführer wenig komfortabel. Wird die Konfiguration aber durch eine einfache Anmeldeprozedur erleichtert, erhöht sich dagegen die Angreifbarkeit eines solchen Systems, so dass die Gefahr von Fehlfunktionen und Störungen steigt und sich zudem der Diebstahlschutz hierdurch verringert.

Insbesondere für Betreiber eines Fuhrparks mit mehreren Fahrzeugen und Anhängern, beispielsweise von Nutzfahrzeugen, insbesondere Lastkraftwagen (LKW) und LKW-Anhängern (Trailer), sind neue Zuordnungen (beispielsweise aufgrund von erreichter Lebensdauer, Mindestprofiltiefe, Jahreszeitenwechsel) von Rädern zu einem Fahrzeug (üblicherweise in Form einer Anmeldung an das Fahrzeugsteuergerät) häufig und mit bestehenden Systemen wenig komfortabel durchzuführen.

Der vorliegenden Erfindung liegt daher die Aufgabe zugrunde, ein Verfahren zur Zuordnung von Rädern zu einem Fahrzeug und/oder Überwachung von Reifenparametern, sowie eine Anordnung und ein Rad hierfür zu schaffen, das eine komfortable Zuordnung ermöglicht und dennoch eine hohe Sicherheit gegen Fehlfunktionen und Störungen bietet.

Diese Aufgabe wird erfindungsgemäß durch ein Verfahren mit den Merkmalen des Anspruchs 1 sowie durch eine Anordnung mit den Merkmalen des Anspruchs 9 und durch ein Rad mit den Merkmalen des Anspruchs 11 gelöst.

Nach der Erfindung weist jedes Rad eines Fahrzeugs eine Sende- und/oder Empfangseinrichtung (vorzugsweise mit einer eindeutigen Kennung) auf, wobei wenigstens eine dieser Sende- und/oder Empfangseinrichtungen als Master-Einheit fungiert bzw. definiert wird oder ausgebildet ist. Die (oder jede) Master-Einheit meldet ihre insbesondere eindeutige Kennung, sowie vorzugsweise Status und Geoposition, über eine erste drahtlose WAN-Kommunikationsverbindung einer dritten, externen Einheit oder kann von dieser entsprechend abgefragt werden.

Diese erste Kommunikationsverbindung ist erfindungsgemäß als drahtloses Wide-Area-Network (WAN), insbesondere als Low-Power Wide-Area-Network (LPWAN) ausgebildet, über welche die (oder jede) Master-Einheit mit der dritten, externen Einheit, insbesondere einer externen Speichereinrichtung, beispielsweise einem dedizierten Datenbankserver oder Cloud-Datenbankserver, kommuniziert.

In einer Ausführungsform der Erfindung können alle Sende- und/oder Empfangseinrichtungen von Rädern eines Fahrzeugs als Master-Einheit ausgebildet sein. Entsprechend kommuniziert jede Sende- und/oder Empfangseinrichtung eines Rades eines Fahrzeugs mit der dritten, externen Einheit.

In einer anderen Ausführungsform der Erfindung dienen weitere Sende- oder Sende- und Empfangseinheiten von Rädern des Fahrzeugs als Slave-Einheiten, wobei sich jede Slave-Einheit bei der wenigstens einen Master-Einheit mittels der ersten drahtlosen WAN-Kommunikationsverbindung (vorzugsweise mittels Punkt zu Punkt Verbindung) oder einer weiteren, insbesondere zusätzlichen, drahtlosen LAN-Kommunikationsverbindung intervallartig wiederholt drahtlos meldet, so dass nur die Master-Einheit die Kennungen und/oder den Status (sowie vorzugsweise Status und Geoposition) der sich bei ihr meldenden oder gemeldeten Sende- und/oder Empfangseinheiten überträgt bzw. von dieser dritten, externen Einheit von der Master-Einheit abgefragt werden kann.

Meldungen wie Status der Reifenparameter (insbesondere Druck und Temperatur) oder Alarm über eine Fehlfunktion (insbesondere Druckverlust) an den Fahrer können direkt über die erste WAN-Kommunikationsverbindung an ein WAN-fähiges externes Gerät bzw. Endgerät (Smartphone, Tablet, etc.) des Fahrers oder über eine weitere vorzugsweise zusätzliche LAN-Kommunikationsverbindung (WLAN, Wi-Fi Direct, NFC, Bluetooth, etc.) an ein LAN-fähiges Endgerät (Smartphone, Tablet, etc.) des Fahrers übermittelt werden.

Im Falle einer WAN-Kommunikation ist es auch denkbar, dass die Kommunikation zwischen Sende- und/oder Empfangseinrichtung und WAN-fähigem Endgerät unmittelbar direkt (Punkt zu Punkt Verbindung) ohne Umweg über ein Netzwerk erfolgt.

Eine Zuordnung von Sende- oder Sende- und Empfangseinheiten und damit von Rädern zu einem Fahrzeug kann in allen Ausgestaltungen der Erfindung in einer externen Speichereinrichtung und/oder in einer Speichereinrichtung der wenigstens einen Master-Einheit abgelegt werden, wobei die Zuordnung auch manuell über eine entsprechende Eingabe eines Nutzers vorgenommen werden kann.

Hierdurch wird eine Zuordnung gegenüber einer wenig komfortablen durchzuführenden Anmeldeprozedur (pro Rad) am Steuergerät eines Fahrzeugs deutlich erleichtert. Die erfindungsgemäße Zuordnung über eine dritte, externe Einheit lässt sich aber auch auf einfache Art und Weise, wie beispielsweise verschlüsselte Übertragung, Authentifizierung etc., gegen unbefugten Zugriff schützen.

Ein Senden und Empfangen von Meldungen wird vorteilhafterweise nur von entsprechend zugeordneten Sende- und/oder Empfangseinheiten angenommen, so dass Räder außerhalb der Zuordnung als nicht zugehörige Räder angesehen werden.

Selbstverständlich ist es denkbar, dass die Zuordnung statt manuell oder voreingestellt auch semiautomatisch oder automatisch erfolgt, indem beispielsweise bei Überschreiten eines vordefinierten Zeitintervalls (eine oder mehrere Stunden) oder einer Laufleistung oder einer zusammen zurückgelegten Entfernung (mehrere Kilometer) vorhandene Signale bzw. Meldungen der Slave-Einheiten von einer Master-Einheit als zugeordnet erkannt werden.

In besonders bevorzugter Ausgestaltung der Erfindung wird eine derartige Zuordnung als logische Einheit in der Speichereinrichtung (manuell oder automatisch) abgelegt.

Ein entsprechender Satz von Slave-Einheiten und einer Master-Einheit kann auch bereits vor der Montage noch während der Lagerung zugeordnet werden, so dass nach einer Montage eines ganzen Rädersatzes an einem Fahrzeug keine Zuordnung mehr vorgenommen werden muss.

In weiterer Ausgestaltung der Erfindung kann eine logische Einheit mit einer anderen verbunden werden, indem in der Speichereinheit eine entsprechende Zuordnung vorgenommen wird. Hierdurch ist es auf schnelle und komfortable Weise möglich, mehrere logische Einheiten, wie beispielsweise Fahrzeug und Anhänger, insbesondere Zugmaschine und Trailer, zu einer gesamten Einheit zu verbinden und zu verwalten.

Selbstverständlich ist es auch bei dieser Verbindung von wenigstens zwei logischen Einheiten möglich, diese nicht nur manuell, sondern auch in analoger Weise, wie vorstehend erläutert, automatisch bzw. semi-automatisch vorzunehmen.

Im Falle einer Verbindung von mehreren logischen Einheiten können die jeweiligen Master-Einheiten als solche aktiv bleiben, so dass die Zuordnung als Verbund mehrerer, weiter eigenständig fungierender Master-Einheiten anzusehen ist.

Selbstverständlich ist es aber auch denkbar, dass in einem solchen Verbund nur eine einzige Master-Einheit über ihre weitere drahtlose Kommunikationsverbindung mit einer dritten, externen Einheit kommuniziert, und die anderen Master-Einheiten nur die Kommunikation zu dieser Master-Einheit übernehmen. Zudem ist es denkbar, dass bei einer derartigen Verbindung die anderen Master-Einheiten selbst in den Modus einer Slave-Einheit versetzt werden, so dass sich alle Slave-Einheiten nur bei einer einzigen Master-Einheit melden.

Als Fahrzeug ist im Sinne der Erfindung jede eigenständige Fahrzeugeinheit, also PKW, Anhänger, LKW, LKW-Anhänger, etc. zu verstehen.

In bevorzugter Ausgestaltung der Erfindung kann auch ein Diebstahl von Rädern verhindert und/oder gestohlene Räder nachverfolgt werden. Gerade moderne Räder sind aufgrund ihrer steigenden Anforderungen oft aus hochwertigem Material gefertigt und entsprechend hochpreisig. Es überrascht daher nicht, dass gerade Räder eines Fahrzeugs zum Gegenstand von Diebstahlsdelikten werden.

Zur Erschwerung oder gar Vermeidung von Diebstählen kompletter Räder existieren seit langem mechanische Lösungen. Beispielsweise werden Spezialschrauben verwendet, die zum Lösen einen Spezialschlüssel erfordern, so dass ohne passenden Schlüssel oder Adapter die Räder nicht von einem Fahrzeug abgeschraubt werden können. Leider bieten derartige Spezialschrauben nur einen beschränkten Schutz, da entsprechende Spezialschlüssel oder Adapter auch für unbefugte Personen erhältlich sind oder Umgehungslösungen angefertigt werden können.

Andere existierende Diebstahlschutzsysteme basieren auf vorhandenen Reifendrucküberwachungssystemen, bei denen der Reifendruck eines Rads mittels eines Sensors überwacht wird. Ein Diebstahl eines Rads wird bei diesen Systemen dadurch festgestellt, dass im Fall eines Diebstahls des Rades dessen Sensor keine Reifendruckinformation mehr an das Fahrzeug bzw. dessen Steuergerät übermittelt.

Ein entsprechender Diebstahlalarm kann dann über eine Mobilfunkeinheit an den Eigentümer des Fahrzeugs und/oder an eine gewünschte Einrichtung, wie beispielsweise einen Sicherheitsdienst, die Polizei, etc. gemeldet werden.

In der DE 10 2017 122 178 A1 wird beispielsweise ein Diebstahlschutzsystem für Fahrzeugräder vorgeschlagen, bei dem in jedem Fahrzeugrad ein drahtloser Sendeempfänger platziert ist, um Reifendruckinformationen zu übermitteln und bei dem derselbe drahtlose Sendeempfänger zum Detektieren des Entfernens des Rads von einem Fahrzeug und zum Verfolgen der Position des entfernten Rads verwendet wird.

Nachteiligerweise ist die Konfiguration eines derartigen Systems, wie bereits erwähnt, jedoch nicht trivial und damit für einen Fahrzeugeigentümer oder Fahrzeugführer wenig komfortabel. Wird die Konfiguration aber durch eine einfache Anmeldeprozedur erleichtert, erhöht sich die Angreifbarkeit eines solchen Systems, so dass sich der Diebstahlschutz hierdurch verringert.

Dieser Nachteil wird durch eine besondere Ausgestaltung der Erfindung überwunden. Meldet bzw. melden sich in der bevorzugten Ausgestaltung der Erfindung eine oder mehrere Slave-Einheiten nicht bei der Master-Einheit oder stimmen die Geopositionen der Master-Einheiten oder der wenigstens einen Master-Einheit und Slave-Einheiten nicht überein, so liegt ein Diebstahl vor. Dieser Diebstahl kann als Alarm von der Master-Einheit drahtlos über die erste Kommunikationsstrecke an eine dritte, externe Einheit gemeldet werden oder in der externen Einheit (beispielsweise aufgrund fehlender Meldungen, abweichender Geopositionsdaten oder auffälligen Verlaufs von Geopositionsdaten) detektiert werden und an weitere Teilnehmer, insbesondere an ein WAN-fähiges Gerät (Smartphone, Tablet) eines Fahrers oder Eigentümers, weitergeleitet werden.

Im Weiteren können Aktionen gegen den Diebstahl eingeleitet werden. Beispielsweise kann auf diese Weise nicht nur ein Alarm am Fahrzeug (Hupe, Lichtsignal, etc.) sondern auch ein Alarm bei einer Überwachungsanlage des Areals (Garage, Lagerhalle, Fuhrparkgelände etc.), in dem das Fahrzeug abgestellt ist, ausgelöst werden. Selbstverständlich ist auch eine Meldung an den Fahrzeugeigentümer, eine Zentrale, einen Sicherheitsdienst oder die Polizei möglich.

In bevorzugter Ausgestaltung der Erfindung besitzt jede Sende- und/oder Empfangseinheit eine eindeutige Kennung (ID), so dass nicht nur der Diebstahl einer bestimmten Anzahl von Rädern detektiert werden kann, sondern sogar der Diebstahl eines bestimmten, eindeutig identifizierbaren Rades erkannt wird. In diesem Fall kann auch die Position des eindeutig bestimmten, gestohlenen Rads verfolgt werden.

Zudem verhindert eine eindeutige Kennung Fehler in der Zuordnung von Sende- und/oder Empfangseinheiten zu einem Fahrzeug, da eine doppelte Vergabe auszuschließen ist.

Die erste Kommunikationsverbindung kann als drahtloses Wide-Area-Network (WAN), insbesondere als Low-Power Wide-Area-Network (LPWAN) ausgebildet sein, über welche die Master-Einheit mit der dritten, externen Einheit, insbesondere einer externen Speichereinrichtung, beispielsweise einem dedizierten Datenbankserver oder Cloud-Datenbankserver, kommuniziert.

Selbstverständlich ist es denkbar, dass auch eine Slave-Einheit über eine erste drahtlose Kommunikationsstrecke, insbesondere eine WAN-Verbindung verfügt. Im Falle eines detektierten Diebstahls kann auch diese Kommunikationsverbindung in der entsprechenden Slave-Einheit automatisch aktiviert werden, um eine Nachverfolgung des gestohlenen Rades auf einfachere Weise zu ermöglichen.

In weiterer Ausgestaltung der Erfindung kann eine der wenigstens einen weiteren drahtlosen Kommunikationsverbindungen als LAN-Verbindung (Bluetooth, NFC, etc.) ausgebildet sein, mittels welcher die Master-Einheit mit einem externen Gerät (Smartphone, Tablet, etc.) eines Nutzers, beispielsweise Fahrers, kommuniziert.

Hierdurch können nicht nur Radinformationen (Reifendruck, Position, etc.) angezeigt werden, sondern auch die Zuordnung der Slave-Einheiten zu einer Master-Einheit, Definition der Mastereinheit, etc. komfortabel vorgenommen werden.

Da ein Senden und Empfangen von Meldungen vorteilhafterweise nur von entsprechend zugeordneten Sende- und/oder Empfangseinheiten angenommen wird, werden Räder außerhalb der Zuordnung nicht überwacht.

In jedem Fall ist es nach der Erfindung für einen Fahrzeugeigentümer oder auch Fuhrparkeigentümer einfacher, die montierten oder gelagerten Räder zu verwalten oder gar zu überwachen und/oder einen Diebstahl zu vermeiden.

Zur Durchführung des vorstehend erläuterten Verfahrens weist bei einer Anordnung aus mehreren Rädern eines Fahrzeugs nach der Erfindung jedes Rad jeweils eine Sende- und/oder Empfangseinheit auf, die derart ausgebildet ist, dass sie im WAN-Bereich drahtlos kommunizieren.

Wenigstens eine (oder jede) dieser Sende- und/oder Empfangseinheiten ist dabei als Master-Einheit ausgebildet oder wenigstens eine dieser Sende- und/oder Empfangseinheiten ist als Master-Einheit und die weiteren Sende- oder Sende- und Empfangseinheiten sind als Slave-Einheiten ausgebildet, so dass sich jede Slave-Einheit bei der Master-Einheit intervallartig wiederholt drahtlos meldet.

Vorzugsweise handelt es sich hierbei um baugleiche Sende- und/oder Empfangseinheiten, die alle als Master-Einheit fungieren oder je nach Einsatz konfiguriert werden können, so dass diese Sende- und/oder Empfangseinheiten leichter in Masse und damit kostengünstiger gefertigt werden können.

In weiterer Ausgestaltung der Erfindung weist die Master-Einheit oder die entsprechend konfigurierte Sende- und/oder Empfangseinheit eine Speichereinrichtung auf, in der mehrere Slave-Einheiten zusammen mit der Master-Einheit (pro Fahrzeugeinheit oder gelagerter Satz von Rädern) oder mehrere Master-Einheiten als eine zusammengehörende, logische Einheit automatisch oder manuell definiert und in der Speichereinrichtung abgelegt werden können.

In besonders bevorzugter Ausgestaltung der Erfindung handelt es sich bei den Sende- und/oder Empfangseinheiten um Reifendrucksensoren, die zudem Reifendruckinformationen übermitteln können. Vorteilhafterweise kann durch diese Doppelfunktion der Einbau zusätzlicher Sensoren vermieden werden. Selbstverständlich ist eine Zuordnung von Rädern zu einem Fahrzeug bis hin zu einem Diebstahlschutz auch ohne zusätzliches Detektieren von Reifenparametern möglich.

Die Energieversorgung der Sende- und Empfangseinheiten kann über autarke Batterien erfolgen, die eine Kommunikation über eine lange Zeit (mehrere Monate oder Jahre), insbesondere über die Lebensdauer eines Reifens eines Rads, garantieren. Zudem können jegliche Stromversorgungen verwendet werden, die eine Energieübertragung zwischen Fahrzeug und rotierbaren Rädern ermöglichen. Neben galvanisch gekoppelten Schleifkontakten kommen hier auch induktive Übertragungen in Frage. Zudem ist es denkbar, dass die Bewegungsenergie (Rotationsenergie) eines Rades zur Energieerzeugung verwendet und gegebenenfalls gespeichert wird, um die Sende- und/oder Empfangseinheit mit Energie zu versorgen.

Weitere vorteilhafte Ausgestaltungen ergeben sich aus den abhängigen Ansprüchen.

Die Erfindung wird nachfolgend anhand eines in der Zeichnung dargestellten Ausführungsbeispiels näher erläutert.

In der Zeichnung zeigen:
- Fig. 1: eine schematische Draufsicht auf ein Nutzfahrzeug mit erfindungsgemäßen Rädern;
- Fig. 2: eine schematische Ansicht der Verbindung zwischen den Rädern des Nutzfahrzeugs nach Fig. 1 mit dem Internet der Dinge und
- Fig. 3: eine schematische perspektivische Ansicht eines erfindungsgemäßen Rades in teilgebrochener Darstellung.

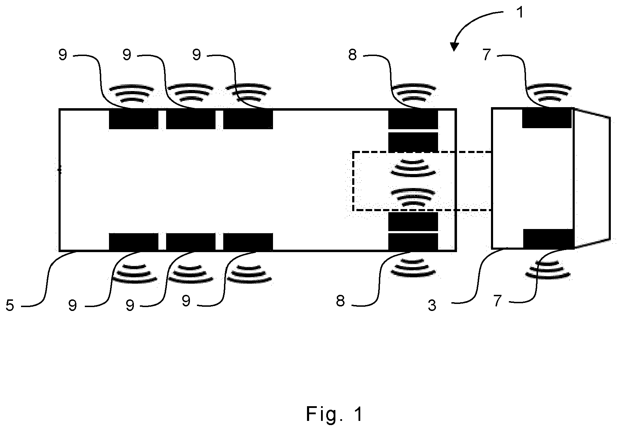

Das in Fig. 1 dargestellte Nutzfahrzeug 1 besteht aus einer Zugmaschine 3 und einem Anhänger bzw. Trailer 5. Wie vorstehend erläutert, sind sowohl Zugmaschine 3 als auch Trailer 5 als eigenständige Fahrzeuge bzw. Fahrzeugeinheiten im Sinne der Erfindung zu verstehen.

Wie ersichtlich, weist die Zugmaschine 3 an ihrer Vorderachse zwei Räder 7 und an ihrer Hinterachse vier Räder 8 auf, wobei die Hinterräder 8 als Zwillingsräder und damit als insgesamt vier Räder ausgeführt sind.

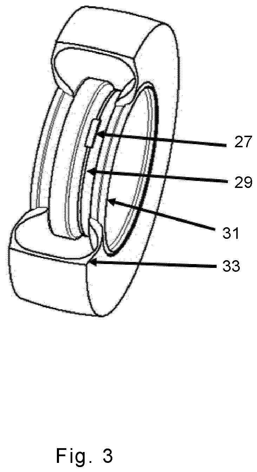

Der Trailer 5 besitzt, wie dargestellt, drei Achsen und weist entsprechend sechs Räder 9 auf. Wie aus Fig. 3 ersichtlich, umfasst ein derartiges Rad 7, 8, 9 einen Reifen 33, welcher auf eine Felge 3 aufgezogen ist. Am Innenumfang der Felge 3 ist mittels einer Befestigungseinrichtung 29, beispielsweise in Form eines umlaufenden Rings, eine Sende- und/oder Empfangseinheit 27 angeordnet, so dass diese sich im Inneren des Reifens 3 befindet bzw. durch diesen Reifen 3 gegenüber der Umgebung abgedeckt ist.

Bei der vorgenannten Sende- und/oder Empfangseinheit 27 kann es sich bei jedem Rad 7 und 9 um baugleiche Sende- und Empfangseinheiten 27 handeln, die je nach Konfiguration (insbesondere per Fernzugriff konfigurierbar) als Slave-Einheit oder Master-Einheit dienen können. Zudem können diese Sende- und/oder Empfangseinheiten 27 gleichzeitig als Reifendrucksensor fungieren, so dass diesen Sende- und/oder Empfangseinheiten 27 eine Doppelfunktion innewohnt.

Erfindungsgemäß fungiert wenigstens eine (oder jede) Sende- und/oder Empfangseinheit 27 als Master-Einheit oder eine Sende- und/oder Empfangseinheit 27 als Master-Einheit und die übrigen Sende- und Empfangseinheiten 27 eines Fahrzeugs, also Trailers oder Zugmaschine 3, als Slave-Einheiten.

Im dargestellten Beispiel dient beispielsweise die Sende- und Empfangseinheit 27 des linken Vorderrades der Zugmaschine 3 als Master-Einheit der Zugmaschine bzw. wird als solche von einem Anwender bzw. Nutzer (insbesondere per Fernzugriff) definiert.

Die weiteren Räder, nämlich rechtes Rad vorne 7 und Hinterräder 8, werden dieser Master-Einheit manuell zugeordnet, so dass die sieben Räder 7 und 8 eine logische Einheit bilden. Statt einer manuellen Zuordnung durch einen Nutzer kann die Zuordnung auch automatisch erfolgen, beispielsweise indem sich montierte Räder eines Fahrzeuges, also jeder Zugmaschine, über einen längeren Zeitraum in örtlicher Nähe befinden und entsprechend eine automatische Anmeldungsprozedur der Slave-Einheiten bei der Master-Einheit ab einem vorgegebenen Zeitpunkt bzw. Dauer eingeleitet und durchgeführt wird.

Entsprechend kann bei dem Trailer 5 das linke Vorderrad 9 als Master-Einheit ausgebildet sein oder konfiguriert werden, an der sich die übrigen Räder 9 in Form von Slave-Einheiten in analoger Weise anmelden und durch diese Zuordnung eine weitere logische Einheit, nämlich die des Trailers 5, bilden.

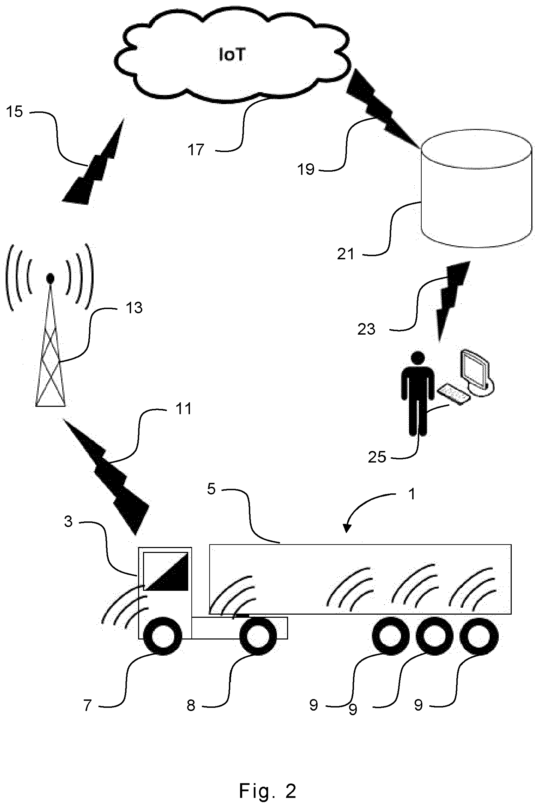

Die Master-Einheiten, also im vorgenannten Fall die Sende- und Empfangseinheit 27 des linken Vorderrades 7 der Zugmaschine 3 und die Sende- und Empfangseinheit 27 des linken Vorderrades 9 des Trailers 5, weisen eine erste WAN-Kommunikationsstrecke bzw. Kommunikationsverbindung auf, nämlich, wie in Fig. 2 dargestellt, eine Funkstrecke 11 zur nächsten Sende- und Empfangsantenne bzw. zum Funkmast 13.

Die Kommunikation zwischen als Slave-Einheiten konfigurierten Sende- und Empfangseinheiten 27 und der Mastereinheit kann hierbei ebenfalls über die erste WAN-Kommunikationsverbindung erfolgen oder über eine weitere, insbesondere zusätzliche, LAN-Kommunikationsverbindung, wobei diese Verbindungen vorzugsweise als unmittelbare direkte (Punkt zu Punkt) Verbindung ausgestaltet sind.

Wie in Fig. 2 dargestellt, werden über den vorgenannten mobilen Datenfunk im Weiteren über eine Breitbandverbindung 15 über das sogenannte Internet der Dinge (loT) 17 und über eine weitere Breitbandverbindung 19 Informationen übertragen und in einer Datenbank bzw. einem Datenbankserver 21 abgelegt bzw. die dort gespeicherten Informationen an die Mastereinheiten (der Räder) 7, 9 und damit auch an die Slave-Einheiten (der Räder) 7, 8, 9 übertragen.

Auf die in der Datenbank 21 abgelegten Informationen und damit die Konfiguration der Master-Einheiten 7, 9 sowie der zugeordneten Slave-Einheiten 7, 8, 9 kann von einem Nutzer über ein Terminal bzw. Front End 25 zugegriffen werden, so dass sowohl die Konfiguration der Zuordnungen (also Räder 7, 8, 9 zu dem Nutzfahrzeug 1 oder Räder 7, 8 zu der Zugmaschine 3 und Räder 9 zu dem Trailer 5) als auch die Konfiguration der einzelnen Sende- und Empfangseinheiten 27 hierdurch erfolgen kann. Zudem können auch Meldungen, wie beispielsweise ein Diebstahlalarm, an ein Nutzerterminal 25 übertragen werden.

Selbstverständlich ist die vorgenannte Art der Verbindungen nur beispielhaft zu verstehen, wobei die Verbindung 11 zum nächsten Mobilfunkmast drahtlos erfolgt und die übrigen Verbindungen auch durch einen sogenannten Cloud-Server bzw. Cloud-Datenbankserver realisiert sein können.

Auf diesem Cloud-Datenbankserver kann von einem Nutzer über ein Nutzerterminal 25 bzw. über jedes internetfähige Gerät wie Smartphone, Tablet, etc. via entsprechender Verbindung zugegriffen werden, um die vorgenannten Konfigurationen vorzunehmen, sowie um Meldungen an diese Geräte via Cloud-Datenbankserver zu übermitteln.

Anstelle der vorstehend erläuterten Ausführungen mit jeweils einer logischen Einheit für Zugmaschine 3 und Trailer 5 ist es selbstverständlich auch denkbar, dass alle Sende- und Empfangseinheiten 27 der Räder 7, 8 und 9 sich als Slave-Einheiten bei einer einzigen Master-Einheit anmelden, so dass für Zugmaschine 3 und Trailer 5 nur eine einzige logische Einheit definiert wird.

In diesem Fall kommuniziert die Zugmaschine 3 samt Trailer 5 über diese eine Master-Einheit via drahtloser Verbindung über das loT 17 bzw. den Cloud-Datenbankserver statt, wie im vorstehend erläuterten Fall, beide Master-Einheiten, nämlich Master-Einheit der Zugmaschine 3 und Master-Einheit des Trailers 5.

Zudem können auch alle Sende- und Empfangseinheiten 27 der Räder 7, 8 und 9 als Master-Einheiten ausgebildet oder konfiguriert sein, so dass in diesem Fall jede Sende- und Empfangseinheit 27 mit der Datenbank bzw. dem Datenbankserver 21 kommuniziert.

Über entsprechende gesicherte Verbindungen, wie beispielsweise SSH, HTTPS oder andere Verschlüsselungen, ist die Konfiguration via Internet bzw. IoT und Datenbankserver 21 ausreichend gegen unbefugten Zugriff geschützt und dennoch für einen Nutzer, insbesondere Fahrzeugeigentümer, Fuhrparkverwalter, etc. auf einfache, schnelle und komfortable Art und Weise konfigurierbar.

Ein umständliches Anmelden der Sende- und Empfangseinheiten 27 an einem jeweiligen Fahrzeug bzw. dessen Steuergerät entfällt. Ein Eingreifen eines Fahrers ist, beispielsweise im Falle einer Reifenpanne und eines notwendigen Radwechsels, zudem möglich, indem der Fahrer entweder eine befugte Person mit Zugriff informiert oder selbst autorisiert ist, um beispielsweise über sein eigenes Smartphone einen entsprechenden Eingriff in der Datenbank 21 vorzunehmen.

Die Kommunikation zwischen Sende- und Empfangseinheiten 27, insbesondere den Mastereinheiten, und dem Fahrer kann hierbei über das loT 17 oder vorzugsweise mittels Punkt zu Punkt Verbindung (WAN oder LAN) erfolgen, so dass insbesondere Statusmeldungen, wie beispielsweise Reifendruck- und Temperatur, auch bei nicht vorhandener WAN-Verbindung übertragen, insbesondere abgefragt werden können.

Wird ein Rad von Dritten entwendet, so wird dies innerhalb der logischen Einheit bemerkt und als Diebstahlalarm Meldung von der Master-Einheit via Mobilfunk und loT an die Datenbank und damit an einen Nutzer gemeldet.

Selbst wenn die Sende- und Empfangseinheiten 27 keine eindeutige ID aufweisen, kann in jedem Fall durch eine Verringerung der vorher festgestellten Anzahl der gemeldeten bzw. sich intervallartig meldenden Sende- und Empfangseinheiten 27 eine Verringerung der Anzahl von Slave-Einheiten detektiert und damit ein Diebstahlalarm ausgelöst werden. Wird dagegen das Rad 7, 9 mit einer Master-Einheit entwendet, wird durch eine größere Anzahl von nicht mehr vorliegenden Meldungen der Slave-Einheiten, nämlich im Beispiel der jeweils fünf anderen Räder, dies ebenfalls registriert, so dass ein Rückschluss auf Entwendung des Rades mit der Master-Einheit getroffen und eine entsprechende Meldung wiederum abgesetzt werden kann.

Weisen die Sende- und Empfangseinheiten 27 dagegen eine eindeutige ID auf, ist ein Diebstahl sowohl in Radposition als auch Art, nämlich Slave- oder Master-Einheit, feststell bar.

Zusätzlich kann im Fall des Diebstahls eines Rades mit einer Master-Einheit bei baugleichen Sende- und Empfangseinheiten vorgesehen sein, dass bei längerem Abbruch eine andere Slave-Einheit die Funktion der Master-Einheit übernimmt, so dass detaillierte Meldungen über den nachfolgenden Ist-Zustand getroffen werden können.

Im Falle eines Diebstahls eines einzelnen Rades kann zudem auch bei einer Slave-Einheit, beispielsweise bei einer entsprechend fehlenden Rückmeldung durch die Master-Einheit, (in einer bidirektionalen Ausführung der Verbindung innerhalb der logischen Einheit untereinander) ein Funktionswechsel erfolgen. Das gestohlene Rad bzw. dessen Slave-Einheit senden über die zweite Kommunikationsverbindung Informationen zur Standortermittlung, um eine leichtere Nachverfolgung eines gestohlenen Rades zu ermöglichen.

### Bezugszeichenliste

- 1: Nutzfahrzeug
- 3: Zugmaschine
- 5: Trailer
- 7: Vorderräder der Zugmaschine
- 8: Hinterräder der Zugmaschine
- 9: Räder des Trailers
- 11: Funkstrecke zur nächsten Sende- und Empfangsantenne (Funkmast)
- 13: Sende- und Empfangsantenne (Funkmast)
- 15: Breitbandverbindung
- 17: IoT zum weltweiten Datenaustausch
- 19: Breitbandverbindung
- 21: Datenbank und Server für Endanwendung
- 23: Breitbandverbindung
- 25: Front End für Benutzerinteraktion (Nutzergerät oder -terminal)
- 27: Sende- und Empfangseinheit (Sensor)
- 29: Befestigung der Einheit (Ring um Felge)
- 31: Felge
- 33: Reifen

## Patentansprüche

1. Verfahren zur Zuordnung von Rädern (7, 8, 9) zu einem Fahrzeug und/oder Überwachung von Reifenparametern, bei dem
a) jedes Rad (7, 8, 9) jeweils eine Sende- und/oder Empfangseinheit (27) aufweist,
b) wenigstens eine Empfangs- oder Sende- und Empfangseinheit (27) als Master-Einheit dient,
c) die als Master-Einheit dienende Empfangs- oder Sende- und Empfangseinheit (27) wenigstens eine erste drahtlose WAN-Kommunikationsverbindung aufweist, mittels welcher sie mit einer dritten, externen Einheit (21) kommuniziert und seine eindeutige Kennung überträgt oder von dieser dritten, externen Einheit (21) abgefragt werden kann.

2. Verfahren nach Anspruch 1, **dadurch gekennzeichnet, dass**
a) weitere Sende- oder Sende- und Empfangseinheiten (27) von Rädern des Fahrzeugs als Slave-Einheiten dienen,
b) jede Slave-Einheit sich bei der wenigstens einen Master-Einheit mittels der ersten drahtlose WAN-Kommunikationsverbindung oder einer weiteren drahtlosen LAN-Kommunikationsverbindung intervallartig wiederholt drahtlos meldet,
c) die wenigstens eine Master-Einheit die Kennungen und/oder den Status der sich bei ihr meldenden oder gemeldeten Sende- und/oder Empfangseinheiten (27) überträgt oder von dieser dritten, externen Einheit (21) abgefragt werden kann.

3. Verfahren nach Anspruch 1 oder 2, **dadurch gekennzeichnet, dass** ein Vorhandensein der weiteren Räder überwacht und ein Verlust der Kommunikation mit einer Sende- und Empfangseinheit (27) eines Rades (7, 8, 9) detektiert und gemeldet wird.

4. Verfahren nach einem der vorhergehenden Ansprüche, **dadurch gekennzeichnet, dass** die wenigstens eine Master-Einheit mittels wenigstens einer weiteren LAN-Kommunikationsverbindung mit einem externen Gerät kommuniziert.

5. Verfahren nach einem der vorhergehenden Ansprüche, **dadurch gekennzeichnet, dass** die Master-Einheit eine Speichereinrichtung besitzt, in welcher die Meldungen zwischengespeichert oder gespeichert werden.

6. Verfahren nach einem der vorhergehenden Ansprüche, **dadurch gekennzeichnet, dass** die Sende- und/oder Empfangseinheiten eines Fahrzeugs als eine zusammengehörende, logische Einheit automatisch oder manuell definiert und in einer Speichereinrichtung (21) abgelegt werden.

7. Verfahren nach Anspruch 6, **dadurch gekennzeichnet, dass** eine logische Einheit mit einer anderen verbunden wird, indem in der Speichereinheit (21) eine entsprechende Zuordnung vorgenommen wird.

8. Verfahren nach einem der vorhergehenden Ansprüche, **dadurch gekennzeichnet, dass** ein Nutzer auf die in der Speichereinrichtung (21) abgelegten Informationen zugreifen und Änderungen vornehmen kann.

9. Anordnung aus mehreren Rädern (7, 8, 9) eines Fahrzeugs (3, 5) zur Durchführung eines Verfahrens nach einem der vorhergehenden Ansprüche, bei der
a) jedes Rad (7, 8, 9) jeweils eine Sende- und/oder Empfangseinheit (27) aufweist, die derart ausgebildet ist, dass sie drahtlos kommunizieren,
b) wenigstens eine Empfangs- oder Sende- und Empfangseinheit (27) als Master-Einheit ausgebildet oder konfiguriert ist und die weiteren Sende- oder Sende- und Empfangseinheiten (27) als Slave-Einheiten ausgebildet oder konfiguriert sind, so dass sich jede Slave-Einheit bei der Master-Einheit intervallartig wiederholt drahtlos meldet, oder alle Empfangs- oder Sende- und Empfangseinheit (27) als Master-Einheit ausgebildet sind,
c) die wenigstens eine Master-Einheit wenigstens eine erste drahtlose WAN-Kommunikationsverbindung aufweist, mittels welcher sie mit einer dritten, externen Einheit (21) kommuniziert und ihren Status oder im Falle von vorhandenen Slave-Einheiten ihren Status und den Status der sich bei ihr meldenden oder gemeldeten Sende- und/oder Empfangseinheiten (27) überträgt oder von dieser dritten, externen Einheit abgefragt werden kann, so dass eine Zuordnung der Räder (7, 8, 9) zu dem Fahrzeug vorgenommen und/oder ein Vorhandensein der Räder (7, 8, 9) überwacht und ein Verlust der Kommunikation mit einer Sende- und Empfangseinheit (27) eines Rades (7, 8, 9) detektiert und gemeldet werden kann.

10. Anordnung nach Anspruch 9, **dadurch gekennzeichnet, dass** die dritte, externe Einheit (17) und/oder die wenigstens eine Master-Einheit eine Speichereinrichtung (21) aufweist, die derart ausgebildet ist, dass mehrere Sende- und/oder Empfangseinheiten (27) als eine zusammengehörende logische Einheit automatisch oder manuell definiert und in der Speichereinrichtung (21) abgelegt werden können.

11. Rad für eine Anordnung nach Anspruch 9 oder 10, **dadurch gekennzeichnet, dass** das Rad (7, 8, 9) eine Sende- und/oder Empfangseinheit (27) aufweist, die eine drahtlose WAN-Kommunikationsverbindung ermöglicht, mittels welcher sie mit einer dritten, externen Einheit (21) kommunizieren kann, so dass eine Zuordnung der Räder (7, 8, 9) zu dem Fahrzeug vorgenommen und/oder ein Vorhandensein der Räder (7, 8, 9) überwacht und ein Verlust der Kommunikation mit einer Sende- und Empfangseinheit (27) eines Rades (7, 8, 9) detektiert und gemeldet werden kann.

12. Rad nach Anspruch 11, **dadurch gekennzeichnet, dass** die Sende- und/oder Empfangseinheit (27) als Reifendrucksensor ausgebildet ist.
